# EUROPEAN PATENT SPECIFICATION

(11) **EP 4 227 519 B1**
(45) Date of publication and mention of the grant of the patent: **06.11.2024**
(21) Application number: 23156068.1
(22) Date of filing: 10.02.2023
(51) Int. Cl.: F02M 26/70, F02D 9/10, F16K 1/226, F16J 15/44, F16K 1/228, F02M 26/68, F02M 26/74, F02M 26/72

(54) **VEHICLE VALVE**
FAHRZEUGVENTIL
SOUPAPE DE VÉHICULE

(30) Priority: 15.02.2022 KR 20220019772
(43) Date of publication of application: 16.08.2023
(73) Proprietor: Kamtec, Inc., Chungcheongbuk-do 27818 (KR)
(72) Inventor: KOO, Jung Suek, 18449 Hwaseong-si (KR); KIM, Seung Yong, 18449 Hwaseong-si (KR); SEO, Chang Ho, 18449 Hwaseong-si (KR)
(74) Representative: Frenkel, Matthias Alexander

(56) References cited:
- AU-A- 5 070 979
- CN-A- 110 848 049
- DE-A1- 102020 123 995
- US-A1- 2018 100 586
- US-A1- 2019 063 612
- US-A1- 2020 240 523
- US-B1- 6 443 135

## Description

### BACKGROUND

### Technical Field

The present disclosure relates to a vehicle valve, and more particularly to a vehicle valve in which a valve plate and a rotation shaft of the plate are spaced apart from each other in a valve housing.

### Discussion of the Related Art

A vehicle valve is provided to control a flow amount of air (fresh air) supplied to an engine of the vehicle or exhaust gas discharged from the engine.

As disclosed in the Patent Document 1 mentioned below, this vehicle valve includes a housing, a driving part provided in the housing, a driving force transmitter connected to the driving part and implemented as a gear assembly, a shaft connected to the driving force transmitter to rotate, and a valve plate which is rotatably provided inside a flow path provided inside the housing and is coupled to the shaft to control an opening degree of the flow path according to rotation of the shaft and to open and close the flow path. Further relevant prior art is included in Patent Documents 2 to 8 mentioned below. Patent Documents 2, 7 and 8 discloses a sealing member formed in a ring shape having one end and another end facing each other.

Generally, a valve plate is formed in a metal disc, and is fastened by a coupling member such as a bolt in a state in which the valve plate is inserted into a slot formed in a central region of a shaft. A rotation center of the shaft is positioned in a central region of the flow path.

In this valve, when the shaft rotates and the valve plate becomes parallel to a direction of flow in the flow path, the valve is in a fully open state, and when the valve plate is inclined with respect to a direction of flow in the flow path, and an edge of the valve plate touches an inner wall of the flow path, the valve is in a fully closed state.

However, in a process of repeating such a fully open state and closed state, a problem in which corrosion due to foreign substances occurs at a contact portion between the valve plate and the inner wall of the passage is pointed out.

### [Cited Reference]

### [Patent Document]

(Patent Document 1) KR 10-1057066 B1 (August 9, 2011)
(Patent Document 2) US 2018/100586 A1 (April 12, 2018)
(Patent Document 3) AU 50709 79 A (March 13, 1980)
(Patent Document 4) CN 110 848 049 A (February 28, 2020)
(Patent Document 5) US 6 443 135 B1 (September 3, 2002)
(Patent Document 6) US 2020/240523 A1 (July 30, 2020)
(Patent Document 7) US 2019/063612 A1 (February 28, 2019)
(Patent Document 8) DE 10 2020 123995 A1 (April 22, 2021)

### SUMMARY

To overcome the problem, a vehicle valve with the features of claim 1 is provided. Preferable embodiments are set forth in the dependent claims.

The present disclosure provides a vehicle valve including a valve housing in which a flow path is formed and a shaft hole is formed in a direction orthogonal to the flow path, a driving part provided in the valve housing, and an opening and closing part including a shaft connected to the driving part and a plate coupled to the shaft and selectively opening and closing the flow path, and controlling flow of gas passing through the flow path, wherein the opening and closing part includes a sealing member coupled to a sealing groove formed on an outer circumferential surface of the plate to shield between the flow path inner circumferential surface and the plate, and disposed to horizontally move in a width direction of the sealing groove.

The sealing member is formed in a ring shape and has one end and another end facing each other, which contact each other in an oblique direction.

The plate may have a cross section with a disk shape, and an inner width of the sealing groove may be larger than a width of the sealing member to enable horizontal movement of the sealing member in a width direction or a radial direction in the sealing groove.

In a state in which the plate shields the flow path, when pressure is applied in a first direction, the sealing member may be in close contact in the first direction inside the sealing groove, and when pressure is applied in a second direction opposite to the first direction, the sealing member may be in close contact in the second direction inside the sealing groove.

One side of the sealing member, which is in contact with at least an inner circumferential surface of the flow path, may be elastically deformable.

In the opening and closing part, the plate may be disposed at a position spaced apart from a rotation shaft of the shaft.

The vehicle valve further includes a square ring that contacts the sealing member when being disposed around the plate to close the opening and closing part inside the flow path, and including at least one planar portion in a circumferential direction on an outer circumferential surface.

### BRIEF DESCRIPTION OF THE DRAWINGS

FIG. 1 is a perspective view showing a vehicle valve according to a first embodiment of the present disclosure.
FIG. 2 is a bottom view showing a rear surface of a rear surface of the vehicle valve shown in FIG. 1.
FIG. 3 is an exploded perspective view showing the vehicle valve shown in FIG. 1.
FIG. 4 is a longitudinal cross-sectional view showing a section of I-I' of the vehicle valve shown in FIG. 1.
FIG. 5 is a partially enlarged view showing a flow path area of the vehicle valve shown in FIG. 4.
FIG. 6 is a cross-sectional view showing a section of II-II' of the vehicle valve shown in FIG. 1.
FIG. 7 is an enlarged reference view showing a state in which a plate is further opened inside a flow path of the vehicle valve shown in FIG. 6.
FIG. 8 is a reference diagram showing a square ring of the vehicle valve shown in FIG. 3.
FIG. 9 is a longitudinal cross-sectional view showing a section of III-III' of the vehicle valve of FIG. 3.
FIG. 10 is a partial enlarged view showing one side of a plate of the vehicle valve shown in FIG. 5.
FIG. 11 is a reference view showing the state in which pressure is applied in a first direction inside a flow path of the vehicle valve shown in FIG. 5.
FIG. 12 is a reference view showing the state in which pressure is applied in a second direction inside the flow path of the vehicle valve shown in FIG. 5.
FIG. 13 is an exploded perspective view of a sealing member of the vehicle valve shown in FIG. 5.

### DETAILED DESCRIPTION

Hereinafter, the present disclosure will be described in detail by explaining exemplary embodiments of the present disclosure with reference to the attached drawings. Like reference numerals in the drawings denote like elements.

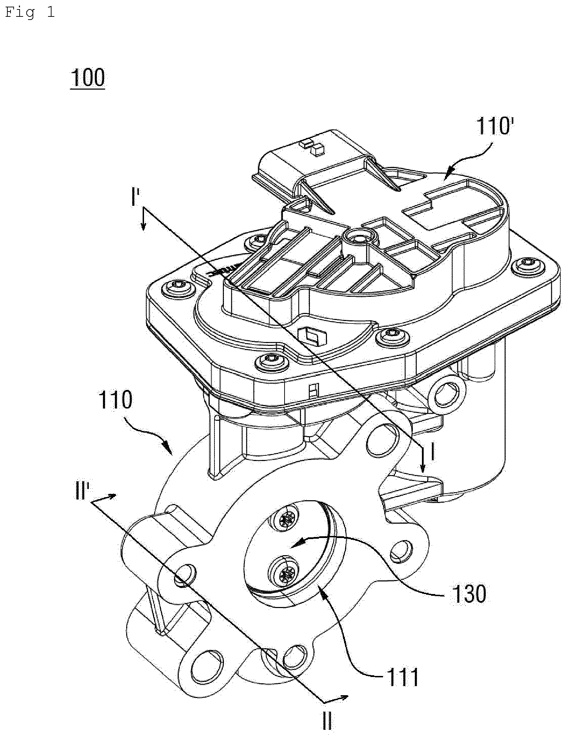

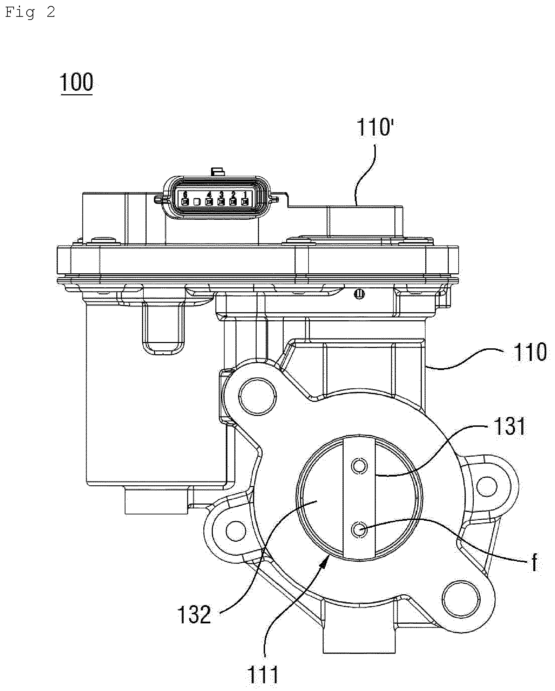

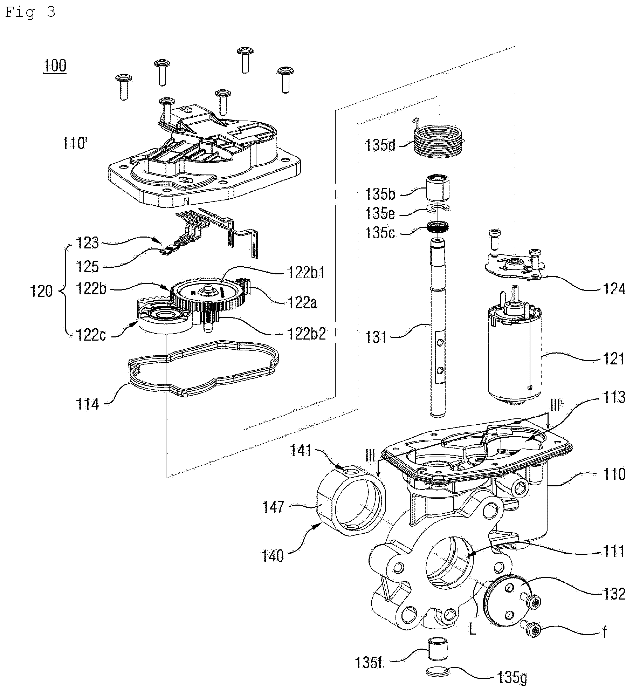

FIG. 1 is a perspective view showing a vehicle valve according to a first embodiment of the present disclosure. FIG. 2 is a bottom view showing a rear surface of a rear surface of the vehicle valve shown in FIG. 1. FIG. 3 is an exploded perspective view showing the vehicle valve shown in FIG. 1.

Referring to FIGS. 1 to 3, a vehicle valve 100 according to the first embodiment of the present disclosure may include a housing 110, a driving part 120, an opening and closing part 130, and a square ring 140.

First, the housing 110 may define an outer appearance of the vehicle valve 100 according to the present disclosure and accomodates the driving part 120, the opening and closing part 130, and the square ring 140 therein, which will be described below.

A space for flow of air or gas may be formed inside the housing 110 by an inner wall, and in the present embodiment, the space for flow of air or gas may be defined as a flow path 111.

The flow path 111 inside the housing 110 according to an embodiment of the present disclosure may be a passage for air to flow, and the opening and closing part 130 described below may be mounted on the flow path to control flow of air.

A shaft hole 112 in which a shaft 131 is installed is formed inside the housing 110. One end of the shaft hole 112 is processed to communicate with the flow path 111. In this case, a longitudinal direction of the shaft hole 112 is orthogonal to a virtual extension line L connecting the centers of the flow path 111.

The driving part 120 provides a driving force to the opening and closing part 130 that selectively blocks or allows air flow in the flow path.

The driving part 120 may include a motor 121, a gear part 122, and a controller 123.

The motor 121 may be inserted into a motor insert part 113 formed inside the housing 110, and a motor cover 124 may fix the motor 121 on the housing 110 while being fixed around the motor insert part 113.

The gear part 122 includes a pinion gear 122a, a reduction gear 122b, and a shaft gear 122c.

The pinion gear 122a may be coupled to a rotation shaft of the motor 121 and may be arranged to be engaged with the reduction gear 122b. The reduction gear 122b may be provided in the form of a double-layered gear including a first gear (large diameter portion) 122b1 engaged with the pinion gear 122a, and a second gear (small diameter portion) 122b2 integrally formed with the first gear 122b1 and having a smaller number of teeth than the first gear 122b1. The second gear 122b2 may be arranged to be engaged with the shaft gear 122c. Therefore, the shaft gear 122c may finally provide a large torque to the opening and closing part 130 while decelerating more than motor output.

The controller 123 may control rotation of the motor 121 or rotation of the shaft gear 122c. For example, the controller 123 may control a rotation direction or speed of the motor 121 or may also detect a rotational state of the shaft gear 122c using a hole sensor 125.

The driving part 120 and the controller 123 may be covered by a housing cover 110' on the housing 110, and the housing cover 110' may also support a part of the driving part 120 on the opposite side of the housing 110.

The opening and closing part 130 includes the shaft 131 and a plate 132.

The shaft 131 may be arranged to be rotatable inside the shaft hole 112 by coupling one end of the shaft 131 to the shaft gear 122c. A magnet 133 may be coupled to one end of the shaft 131 to cause the hole sensor 125 of the controller 123 to detect a rotational state.

A bushing 135a coupled to an outer circumferential surface of the shaft 131 and supporting the shaft 131, a needle bearing 135b, and a seal member 135c may be arranged inside the shaft hole 112. The bushing 135a may be made of bronze or brass. A torsion spring 135d providing restoring force to the shaft gear 122c is provided between the shaft gear 122c and the housing 110.

The plate 132 is coupled to the other end of the shaft 131 to cause the plate 132 to open and close the flow path 111 according to rotation of the shaft 131. The other end of the shaft 131 may penetrate the flow path 111 and may be inserted into an opposite housing to provide support structures on both sides. In this case, the shaft hole 112 may extend inside the opposite housing, and a bushing 135f supporting the other end of the shaft 131 and a cap 135g covering an end of the shaft hole 112 may be provided. The support structures on both sides may support rigid rotation of the shaft 131, and thus may be suitable for structures that require to be precisely controlled.

In addition, one flow path 111 may be formed with two configurations of different materials while the square ring 140 is inserted and fixed inside the flow path 111 and the housing 110 is molded using an insert casting method. In this case, a through hole 141 may be formed in the square ring 140 in such a way that the shaft 131 extends in a direction of the flow path 111. For example, the housing 110 may be made of aluminum, which is easy to process and light, and the square ring 140 may be made of stainless steel, which is resistant to corrosion.

After the plate 132 is coupled to the shaft 131, a fastener f passes through the plate 132 and may be fixed to the shaft 131, and in this case, adhesive may be applied to one or the other side of the fastener f, which is coupled to the shaft 131, or laser welding may be performed thereon to prevent loosening of the fastener f from the shaft 131.

A sealing material 114 may be provided on a surface on which a peripheral part of the driving part 120 and the housing cover 110' face each other or a surface on which the housing 110 and the housing cover 110' are coupled to face each other inside the housing 110.

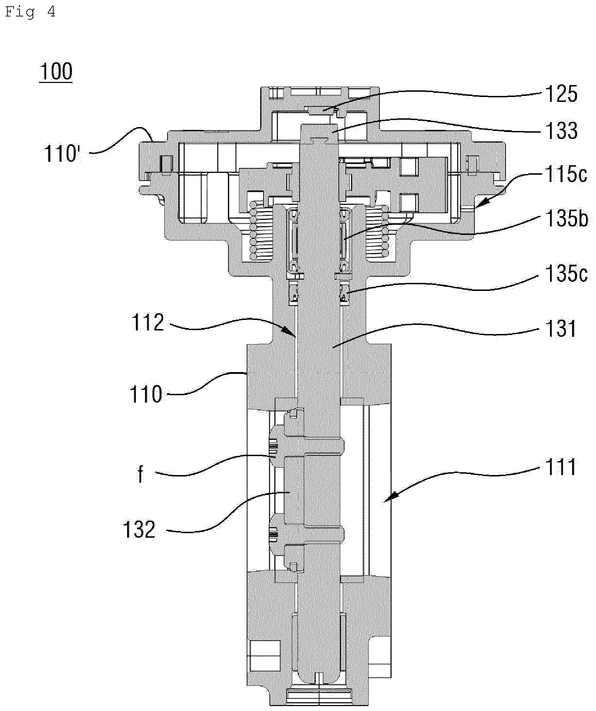

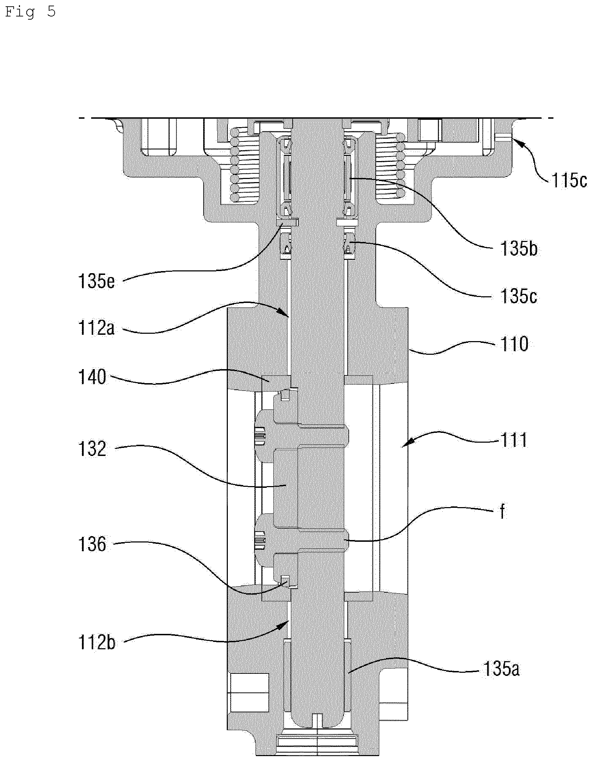

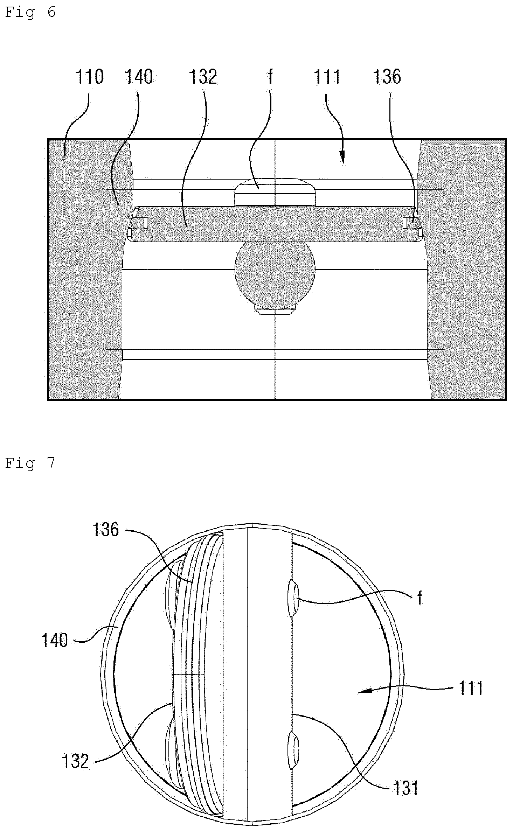

FIG. 4 is a longitudinal cross-sectional view showing a section of I-I' of the vehicle valve shown in FIG. 1. FIG. 5 is a partially enlarged view showing a flow path area of the vehicle valve shown in FIG. 4. FIG. 6 is a cross-sectional view showing a section of II-II' of the vehicle valve shown in FIG. 1. FIG. 7 is an enlarged reference view showing a state in which a plate is further opened inside a flow path of the vehicle valve shown in FIG. 6.

Referring to FIGS. 4 to 6, the shaft hole 112 may include an upper shaft hole 112a and a lower shaft hole 112b. A first step 115a may be provided in the upper shaft hole 112a to support a retaining washer 135e coupled to an outer circumferential surface of the shaft 131, and a seal member 135c may be provided to form a minimum assembly tolerance between the shaft 131 and the shaft hole 112 adjacently to an area in which a seal member 135c is coupled to the shaft 131.

The housing 110 may include a vent hole 115c formed to communicate with the outside. The vent hole 115c may guide condensate condensed inside the housing 110 or foreign substances such as air or moisture introduced from the flow path 111 into the shaft hole 112 to be discharged to the outside and thus may prevent air from being introduced in a direction of the driving part 120. In detail, the vent hole 115c may be disposed on a sidewall of the housing 110 adjacent to the driving part 120. Accordingly, the vent hole 115c may discharge heat generated around the driving part to the outside.

As shown in FIG. 6, the plate 132 includes a sealing member 136 in contact with an inner circumferential surface of the square ring 140. The sealing member 136 may improve shielding performance while reducing direct friction between the plate and the square ring 140. The sealing member 136 may be implemented with a material having less hardness than the material of the square ring 140 and having elasticity. The sealing member 136 may have a sealing function of a piston ring or gasket.

Referring to FIGS. 6 and 7, while the plate 132 rotates inside the flow path 111, the sealing member 136 and the inner circumferential surface of the square ring 140 may repeatedly come into contact, and in this case, moisture and foreign substances contained in air may partially accumulate between the sealing member 136 or the plate 132 and the inner circumferential surface of the square ring 140. When moisture and foreign substances are gradually deposited, corrosion occurs between the square ring 140 and the sealing member 136, and since the sealing member 136 is in continuous contact with the inner circumferential surface of the square ring 140, there is a low possibility of corrosion, and usually corrosion may occur on the inner circumferential surface of the square ring 140.

As a countermeasure to prevent this problem, the square ring 140 made of corrosion-resistant stainless steel may be mounted at a location of the flow path 111 in the housing 110, and then a part of the flow path 111 may be manufactured by insert casting.

Needless to say, the sealing member 136 may correspond to a part of a sphere shape having a rotation shaft of the shaft 131 located inside the flow path 111 as a diameter, and the sealing member 136 and the inner circumferential surface of the square ring 140 may have line contact with each other.

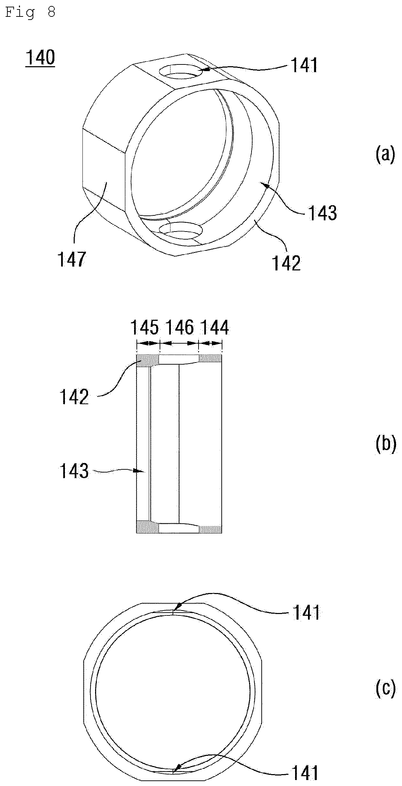

FIG. 8 is a reference diagram showing a square ring of the vehicle valve shown in FIG. 3.

Referring to FIG. 8, the square ring 140 may include a cylindrical portion 142 made of a stainless-steel material, and the through hole 141 into which the shaft 131 is inserted through the cylindrical portion 142.

The cylindrical portion 142 includes a hollow portion 143 having a ring shape with a predetermined width and formed to correspond to the flow path 111 therein. That is, the flow path 111 and the hollow part 143 may have the same or similar inner diameters.

The through hole 141 may have a size corresponding to an inner diameter of the shaft hole 112. The through hole 141 may be disposed on at least one side of the cylindrical portion 142 and may be formed to pass through a central region of the cylindrical portion 142.

The cylindrical portion 142 includes a first region 144, a second region 145, and a third region 146.

The first region 144 is disposed at one side of the cylindrical portion 142 to have the largest thickness in a direction of the virtual extension line L (refer to FIG. 3) connecting the centers of the flow path 111.

The second region 145 is disposed at the other side of the cylindrical portion 142 to have a smaller thickness than the first region 144.

The third region 146 is a portion connecting the first region 144 and the second region 145 and having an inner circumferential surface formed of a curved surface or an inclined surface.

That is, in the cylindrical portion 142, the first region 144 to the third region 146 may have the same outer diameter and different inner diameters, resulting in a difference in thickness. A detailed processing method of the cylindrical portion 142 will be described later.

The cylindrical portion 142 is provided with a planar portion 147 on an outer circumferential surface, and an inner circumferential surface of the first region 144 may be provided with an inner stair 148.

The planar portion 147 may be formed by being cut into a curved surface with a different curvature from the outer circumferential surface or a plane. In the present embodiment, a shape in which the planar portion 147 is cut into a plane having a predetermined width will be described as an example.

The planar portion 147 may form a section in which the square ring 140 having a circular cross section contacts the housing 110 in a plane-to-plane pattern during an insert casting process. That is, when the housing 110 and the square ring 140 come into contact only with a curved surface having a constant curvature, slip may occur therebetween or rotation relative to a predetermined angle may occur, and thus this may be prevented through the planar portion 147.

The at least one planar portion 147 may be disposed to correspond to a location of the shaft hole 112. Accordingly, when the through hole 141 is post-processed to correspond to the shaft hole 112 on the cylindrical portion 142, cutting may be performed while a cutting tool is inserted into the shaft hole 112 and contacts the planar portion 147. A stable punching position may be advantageously set because the tool contacts the planar portion 147 compared to cutting by contacting the curved surface on the outer circumferential surface of the cylindrical portion 142. Needless to say, the plurality of planar portions 147 may be arranged at equal intervals in a circumferential direction of the cylindrical portion 142 while being formed in a width direction of the cylindrical portion 142, and another planar portion may be disposed to correspond to a location at which the shaft hole 112 is formed in the opposite housing based on the flow path 111. Accordingly, two planar portions 147 may be provided to correspond to the location of the shaft hole 112 on the outer circumferential surface of the cylindrical portion 142, or a total of four planar portions may be provided at equal intervals or at equal angles.

The plate 132 or the sealing member 136 comes into contact with the inner circumferential surface of the second region of the square ring 140 in a process of closing the opening and closing part 130, and for a smooth opening and closing operation of the plate 132, the second Region 145 is may be made of a curved surface or an inclined surface shape.

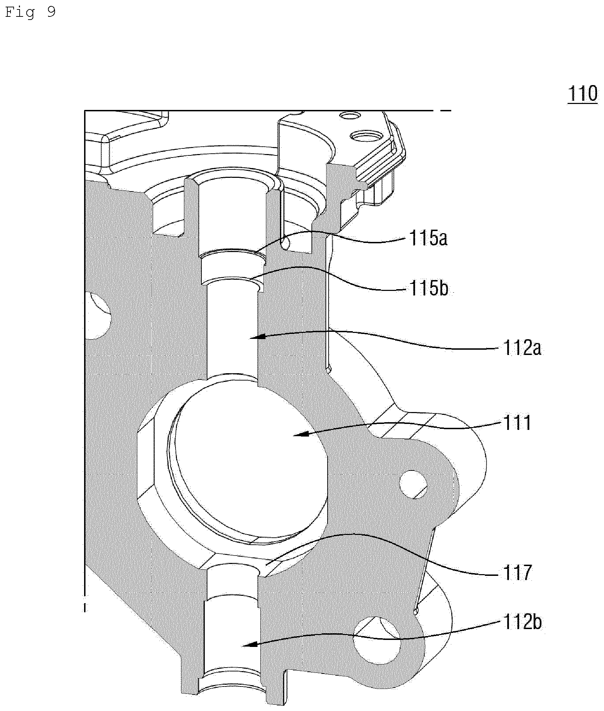

FIG. 9 is a longitudinal cross-sectional view showing a section of III-III' of the vehicle valve of FIG. 3.

FIG. 9 shows a state in which the shaft hole 112 and the flow path 111 are partially cut in a longitudinal direction of the housing 110, and a state in which the square ring 140 is omitted on the flow path 111.

Referring to FIGS. 8 and 9, in the housing 110, a planar portion support portion 117 formed of a plane may protrude to face the planar portion 147 on the flow path 111.

That is, the planar portion support portion 117 may prevent rotation of the square ring 140 by contacting and supporting the planar portion 147 while a base material faces an area of the planar portion 147 during a molding process of the housing 110.

The first step 115a and the second stair 115b inside the shaft hole 112 may be formed more precisely through secondary processing. For example, the first step 115a and the second stair 115b may be processed simultaneously during a molding process of the housing 110, and after processing is completed, the first step 115a and the second stair 115b are post-processed using a tool (not shown). Needless to say, after the shaft hole 112 without steps is pre-processed, the first step 115a and the second stair 115b may be formed by post-processing using a tool.

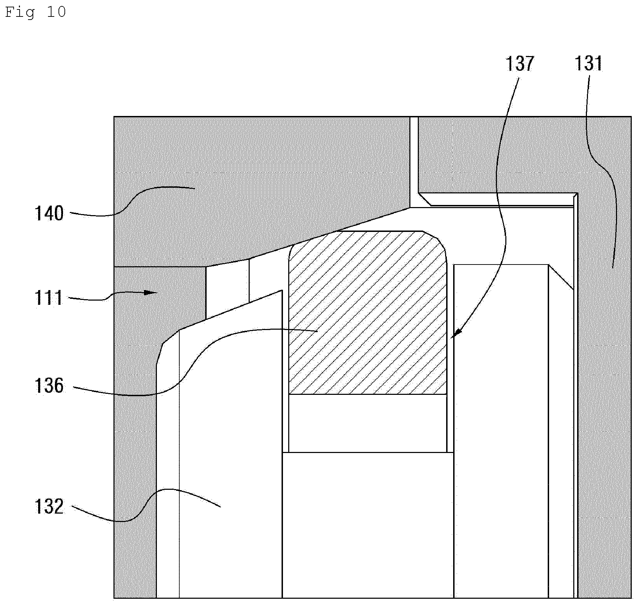

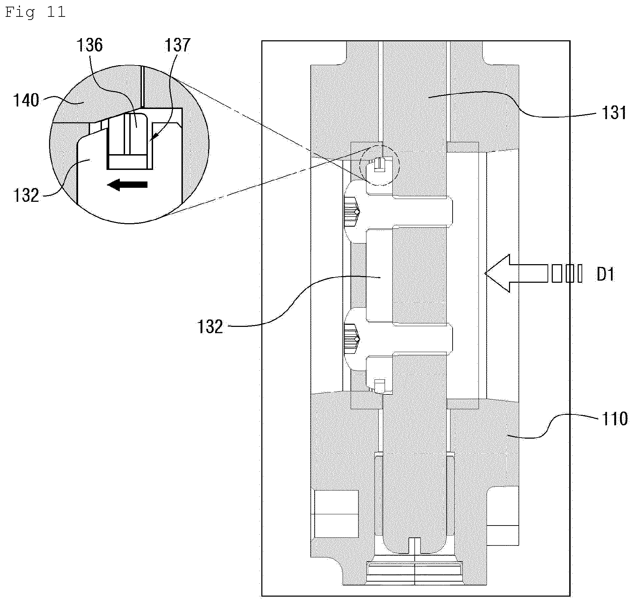

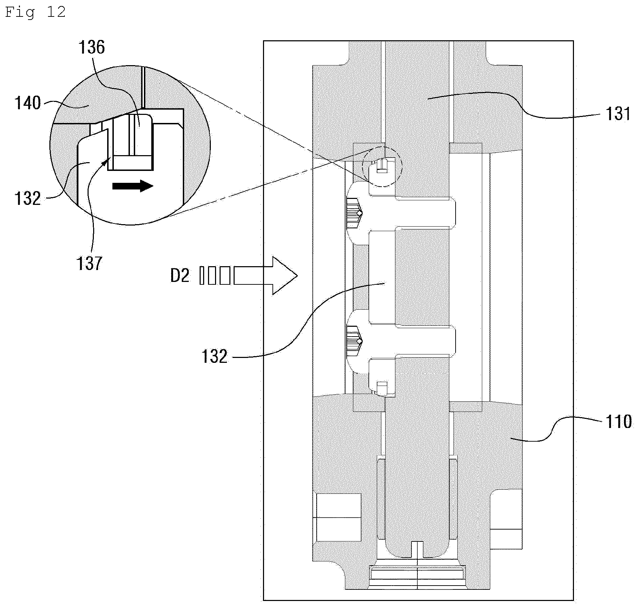

FIG. 10 is a partial enlarged view showing one side of a plate of the vehicle valve shown in FIG. 5. FIG. 11 is a reference view showing the state in which pressure is applied in a first direction inside a flow path of the vehicle valve shown in FIG. 5. FIG. 12 is a reference view showing the state in which pressure is applied in a second direction inside the flow path of the vehicle valve shown in FIG. 5.

Referring to FIGS. 10 to 12, the vehicle valve 100 according to the present disclosure may be installed to enable horizontal movement of the sealing member 136 on the plate 132.

A sealing groove 137 in which the sealing member 136 is installed is formed on the outer circumferential surface of the plate 132, and the sealing member 136 may be moved in a width direction of the sealing groove 137 inside the sealing groove 137 by a pressure condition inside the flow path.

That is, a predetermined gap is formed between the sealing groove 137 and the sealing member 136 according to assembly tolerance, and in this regard, the sealing member 136 is manufactured to artificially and horizontally move in a width direction of the sealing groove 137 by limiting the assembly tolerance within a predetermined range. Needless to say, in order for the sealing member 136 to move in the width direction inside the sealing groove 137, the width of the sealing groove 137 is larger than that of the sealing member 136.

As shown in FIG. 11, in a state where the opening and closing part 130 (refer to FIG. 1) closes the flow path 111, when pressure is formed in a first direction D1 inside the flow path, the sealing member 136 may be pressed and adhered in the first direction D1 inside the sealing groove 137 by the pressure of the first direction D1. In this case, a relatively greater pressure may be formed between the sealing member 136 and the square ring 140, through which sealing force may be increased.

As shown in FIG. 12, in a state in which the opening and closing part 130 (refer to FIG. 1) closes the flow path 111, when pressure is formed inside the flow path in a second direction D2 opposite to the first direction, the sealing member 136 may be pressed and adhered in the second direction D2 inside the sealing groove 137 by the pressure of the second direction D2. In this case, a contact state may be maintained between the sealing member 136 and the square ring 140, and a relatively small pressure may be formed.

In order to maintain sealing force with the square ring 140 while the sealing member 136 horizontally moves inside the sealing groove 137, the sealing member 136 may be made of an elastic material for elastic deformation. Needless to say, at least one side of the sealing member 136 in contact with the square ring 140 may be made of an elastic material.

Therefore, since the position or area in which the sealing member 136 contacts an inner circumferential surface of the square ring 140 is deformed, it may be possible to minimize corrosion in the contact area between the inner circumferential surface of the square ring 140 and the sealing member 136, and even if deformation occurs compared to an initial state of manufacture due to wear of the plate 132 or the square ring 140 during an opening and closing operation of the opening and closing part 130, the sealing member 136 moves according to a direction of internal pressure, and thus sealing force may be maintained.

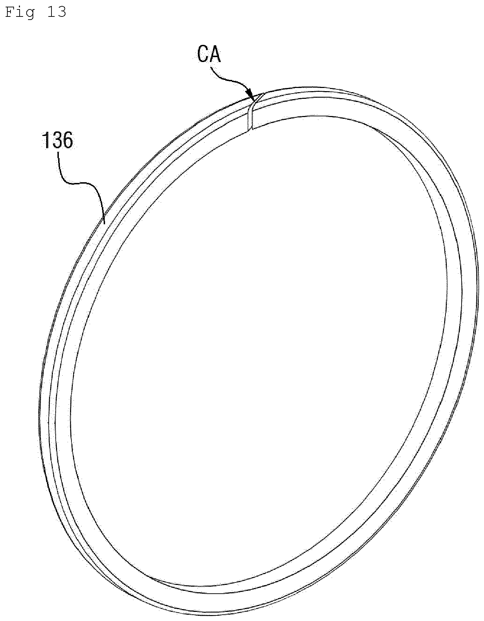

FIG. 13 is an exploded perspective view of a sealing member of the vehicle valve shown in FIG. 5.

Referring to FIG. 13, the sealing member 136 is formed in a ring shape. In this case, some areas of the sealing member 136 are configured adjacent to each other in a cut state, and both one end and the other end of the sealing member 136 may be cut in the same oblique direction and placed in contact with each other. Here, the oblique direction means that a surface of one end and a surface of the other end of the sealing member 136 are disposed at an angle that is not orthogonal to a longitudinal direction or radial direction of the sealing member 136 and the surface of one end and the surface of the other end overlap at least partially with respect to the orthogonal direction.

That is, since one end and the other end of the sealing member 136 are cut to face each other in the same oblique direction, pressure leakage in a width direction of the sealing member may be minimized.

As shown in FIG. 11 or 12, when pressure is applied to the sealing member 136 in a first direction or a second direction, since a cutting area CA provides a structure that is more closely adhered by pressure, sealing force may be further increased.

Although not shown in the drawings, a shape of the cutting area CA of the sealing member 136 may be implemented in various patterns to increase the contact area between both ends. In the sealing member, opposite surfaces of both ends of the cutting area CA have a cross-sectional shape including any one selected from, for example, a stair pattern, a sawtooth pattern, and a wavy pattern, and thus when contacting each other, the cutting area CA may be engaged with each other.

Therefore, by virtue of the vehicle valve according to an embodiment of the present disclosure, the sealing member may be disposed in a spherical line contact with the square ring inside the flow path of the vehicle valve, thereby minimizing wear to increase durability. Even if the contact area with the sealing member in the flow path is worn out, the sealing force may be maintained by arranging the sealing member to move horizontally inside the sealing groove. The vehicle valve may be applied to a structure in which fluid simultaneously flows in both directions in the flow path. The planar portion may be provided on the outer circumferential surface of the square ring, and thus it may be easy to process the through hole into which the shaft is inserted and it may be possible to prevent slip or relative rotation between the housing and the square ring.

By virtue of the vehicle valve according to an embodiment of the present disclosure,

First, the sealing member may be disposed in a spherical line contact with the square ring inside the flow path of the vehicle valve, thereby minimizing wear to increase durability.

Second, even if the contact area with the sealing member in the flow path is worn out, the sealing force may be maintained by arranging the sealing member to move horizontally inside the sealing groove.

Third, the vehicle valve may be applied to a structure in which fluid simultaneously flows in both directions in the flow path,

Fourth, the planar portion is provided on the outer circumferential surface of the square ring, and thus it may be easy to process the through hole into which the shaft is inserted and it may be possible to prevent slip or relative rotation between the housing and the square ring.

## Claims

1. A vehicle valve (100) comprising:
a housing (110) in which a flow path (111) is formed and a shaft hole (112) is formed in a direction orthogonal to the flow path (111);
a driving part (120) provided in the housing (110);
an opening and closing part (130) including a shaft (131) connected to the driving part (120) and a plate (132) coupled to the shaft (131) and selectively opening and closing the flow path (111), and controlling flow of gas passing through the flow path (111); and
wherein the opening and closing part (130) includes a sealing member (136) coupled to a sealing groove (137) formed on an outer circumferential surface of the plate (132) to shield between the flow path (111) inner circumferential surface and the plate (132) and disposed to horizontally move in a width direction of the sealing groove (137),
the vehicle valve further comprising a square ring (140) that contacts the sealing member (136) when being disposed around the plate (132) to close the opening and closing part (130) inside the flow path (111), and including at least one planar portion (147) in a circumferential direction on an outer circumferential surface,
wherein, in the opening and closing part (130), the plate (132) is disposed at a position spaced apart from a rotation shaft of the shaft (131),
wherein the square ring (140) includes:
a cylindrical portion (142) including a hollow portion (143); and
a through hole (141) through which the shaft (131) is inserted;
wherein the cylindrical portion (142) includes:
a first region (144) disposed at one side of the cylindrical portion (142);
a second region (145) disposed at the other side of the cylindrical portion (142); and
a third region (146) being a portion connecting the first region (144) and the second region (145) and having an inner circumferential surface formed of a curved surface or an inclined surface,
wherein the first region (144) has the largest thickness among the first region (144), second region (145) and third region (146),
wherein the second region (145) has an inner circumferential surface,
wherein the inner circumferential surface comes into contact with the plate (132) or the sealing member (135) in a process of closing the opening and closing part (130), and is made of a curved surface or an inclined surface shape.

2. The vehicle valve of claim 1, wherein the sealing member (136) is formed in a ring shape and has one end and another end facing each other, which contact each other in an oblique direction.

3. The vehicle valve (100) of claim 1 or 2, wherein the plate (132) has a cross section with a disk shape, and an inner width of the sealing groove (137) is larger than a width of the sealing member (136) to enable horizontal movement of the sealing member (136) in a width direction or a radial direction in the sealing groove (137).

4. The vehicle valve (100) of any one of claims 1 to 3, wherein, in a state in which the plate (132) shields the flow path (111), when pressure is applied in a first direction, the sealing member (136) is in close contact in the first direction inside the sealing groove (137), and when pressure is applied in a second direction opposite to the first direction, the sealing member (136) is in close contact in the second direction inside the sealing groove (137).

5. The vehicle valve (100) of any one of claims 1 to 4, wherein one side of the sealing member (136), which is in contact with at least an inner circumferential surface of the flow path (111), is elastically deformable.

6. The vehicle valve (100) of claim 1,
wherein the cylindrical portion (142) is formed of a stainless-steel material; and
wherein the through hole (141) through which a region corresponding to the shaft hole (112) is formed on the cylindrical portion (142).

7. The vehicle valve (100) of claim 1 or 6, wherein, in the square ring (140), the planar portion (147) is disposed to correspond to a position of the shaft hole (112).

8. The vehicle valve (100) of claim 7, wherein a plurality of planar portions (147) is formed in a width direction of the cylindrical portion (142) and the planar portions (147) are arranged at equal intervals from each other in a circumferential direction of the cylindrical portion (142).

9. The vehicle valve (100) of any one of claims 1 to 8, wherein, in a case of a one-side support structure, the housing (110) includes a bushing (135a) coupled to an outer circumferential surface of the shaft (131), a needle bearing (135b), a retaining washer (135e) disposed below the needle bearing (135b), and a seal member (135c) shielding between an upper shaft hole (112a) and the flow path (111), which are sequentially provided.

10. The vehicle valve (100) of claim 9, wherein the housing (110) includes a vent hole (115c) through which the shaft hole (112) communicates with an outside and which is disposed between the bushing (135a) and the needle bearing (135b), and
wherein an interval between the bushing (135a) and the needle bearing (135b) is larger than an interval between the needle bearing (135b) and the square ring (140).

11. The vehicle valve (100) of any one of claims 1 to 10, wherein, in a case of a both-side support structure, the housing (110) includes an upper shaft hole (112a) and a lower shaft hole (112b) that face each other based on the flow path (111),
wherein the upper shaft hole (112a) includes a needle bearing (135b) coupled to an outer circumferential surface of the shaft (131), a retaining washer (135e) disposed below the needle bearing (135b), and a seal member (135c) shielding between an upper shaft hole (112a) and the flow path (111), which are sequentially provided, and
wherein the lower shaft hole (112b) includes a bushing (135f) supporting an end of the shaft (131) and a cap (135g) covering an end of the lower shaft hole (112b).

12. The vehicle valve (100) of any one of claims 1 to 11, wherein the housing (110) includes a vent hole (115c) through which a side surface adjacent to the driving part (120) communicates with an outside.

13. The vehicle valve (100) of any one of claims 1 to 12, wherein opposite surfaces of both ends of a cutting area (CA) of the sealing member (136) have a cross-sectional shape including anyone selected from a sawtooth pattern, and a wavy pattern and are engaged with each other.

## Patentansprüche

1. Fahrzeugventil (100) umfassend:
ein Gehäuse (110), in dem ein Strömungspfad (111) gebildet ist und ein Wellenloch (112) in einer Richtung senkrecht zum Strömungspfad (111) gebildet ist;
ein Antriebsteil (120), das im Gehäuse (110) vorgesehen ist;
ein Öffnungs- und Schließteil (130), das eine mit dem Antriebsteil (120) verbundene Welle (131) und eine Platte (132), die mit der Welle (131) gekoppelt ist und den Strömungspfad (111) selektiv öffnet und schließt, umfasst und einen Gasstrom steuert, der durch den Strömungspfad (111) strömt; und
wobei das Öffnungs- und Schließteil (130) ein Dichtungselement (136) umfasst, das mit einer Dichtungsnut (137) gekoppelt ist, die an einer Außenumfangsfläche der Platte (132) gebildet ist, um zwischen der Innenumfangsfläche des Strömungspfads (111) und der Platte (132) abzuschirmen, und das so angeordnet ist, dass es sich horizontal in einer Breitenrichtung der Dichtungsnut (137) bewegt,
wobei das Fahrzeugventil weiterhin einen quadratischen Ring (140) umfasst, der das Dichtungselement (136) berührt, wenn er um die Platte (132) herum angeordnet ist, um das Öffnungs- und Schließteil (130) innerhalb des Strömungspfads (111) zu schließen, und zumindest einen ebenen Abschnitt (147) in einer Umfangsrichtung auf einer Außenumfangsfläche umfasst,
wobei, in dem Öffnungs- und Schließteil (130), die Platte (132) an einer Position angeordnet ist, die von einer Drehwelle der Welle (131) beabstandet ist,
wobei der quadratische Ring (140) umfasst:
einen zylindrischen Abschnitt (142), der einen hohlen Abschnitt (143) umfasst; und
ein Durchgangsloch (141), durch das die Welle (131) eingeführt ist;
wobei der zylindrische Abschnitt (142) umfasst:
einen ersten Bereich (144), der an einer Seite des zylindrischen Abschnitts (142) angeordnet ist;
einen zweiten Bereich (145), der an der anderen Seite des zylindrischen Abschnitts (142) angeordnet ist; und
einen dritten Bereich (146), der ein Abschnitt ist, der den ersten Bereich (144) und den zweiten Bereich (145) verbindet und eine Innenumfangsfläche aufweist, die aus einer gekrümmten Oberfläche oder einer geneigten Oberfläche gebildet ist,
wobei der erste Bereich (144) die größte Dicke unter dem ersten Bereich (144), dem zweiten Bereich (145) und dem dritten Bereich (146) aufweist,
wobei der zweite Bereich (145) eine Innenumfangsfläche aufweist,
wobei die Innenumfangsfläche in einem Prozess eines Schließens des Öffnungs- und Schließteils (130) mit der Platte (132) oder dem Dichtungselement (135) in Kontakt kommt und aus einer gekrümmten Oberfläche oder einer geneigten Oberflächenform besteht.

2. Fahrzeugventil nach Anspruch 1, wobei das Dichtungselement (136) in einer Ringform gebildet ist und ein Ende und ein anderes Ende aufweist, die einander zugewandt sind und einander in einer schrägen Richtung berühren.

3. Fahrzeugventil (100) nach Anspruch 1 oder 2, wobei die Platte (132) einen scheibenförmigen Querschnitt aufweist und eine Innenbreite der Dichtungsnut (137) größer als eine Breite des Dichtungselements (136) ist, um eine horizontale Bewegung des Dichtungselements (136) in einer Breitenrichtung oder einer radialen Richtung in der Dichtungsnut (137) zu ermöglichen.

4. Fahrzeugventil (100) nach einem der Ansprüche 1 bis 3, wobei in einem Zustand, in dem die Platte (132) den Strömungspfad (111) abschirmt, das Dichtungselement (136), wenn Druck in einer ersten Richtung angewendet wird, in der ersten Richtung innerhalb der Dichtungsnut (137) in engem Kontakt steht, und, wenn Druck in einer zweiten Richtung, die der ersten Richtung entgegengesetzt ist, angewendet wird, das Dichtungselement (136) in der zweiten Richtung innerhalb der Dichtungsnut (137) in engem Kontakt steht.

5. Fahrzeugventil (100) nach einem der Ansprüche 1 bis 4, wobei eine Seite des Dichtungselements (136), die mit zumindest einer Innenumfangsfläche des Strömungspfads (111) in Kontakt steht, elastisch verformbar ist.

6. Fahrzeugventil (100) nach Anspruch 1,
wobei der zylindrische Abschnitt (142) aus einem Edelstahlmaterial gebildet ist und
wobei das Durchgangsloch (141), durch das ein dem Wellenloch (112) entsprechender Bereich auf dem zylindrischen Abschnitt (142) gebildet ist.

7. Fahrzeugventil (100) nach Anspruch 1 oder 6, wobei im quadratischen Ring (140) der ebene Abschnitt (147) so angeordnet ist, dass er einer Position des Wellenlochs (112) entspricht.

8. Fahrzeugventil (100) nach Anspruch 7, wobei eine Mehrzahl ebener Abschnitte (147) in einer Breitenrichtung des zylindrischen Abschnitts (142) gebildet ist und die ebenen Abschnitte (147) in einer Umfangsrichtung des zylindrischen Abschnitts (142) in gleichen Abständen voneinander angeordnet sind.

9. Fahrzeugventil (100) nach einem der Ansprüche 1 bis 8, wobei das Gehäuse (110) im Falle einer einseitigen Stützstruktur eine mit einer Außenumfangsfläche der Welle (131) gekoppelte Buchse (135a), ein Nadellager (135b), eine unter dem Nadellager (135b) angeordnete Sicherungsscheibe (135e) und ein Dichtungselement (135c), das zwischen einem oberen Wellenloch (112a) und dem Strömungspfad (111) abschirmt, umfasst, die nacheinander vorgesehen sind.

10. Fahrzeugventil (100) nach Anspruch 9, wobei das Gehäuse (110) ein Entlüftungsloch (115c) umfasst, durch das das Wellenloch (112) mit einer Außenseite in Verbindung steht und das zwischen der Buchse (135a) und dem Nadellager (135b) angeordnet ist, und
wobei ein Abstand zwischen der Buchse (135a) und dem Nadellager (135b) größer als ein Abstand zwischen dem Nadellager (135b) und dem quadratischen Ring (140) ist.

11. Fahrzeugventil (100) nach einem der Ansprüche 1 bis 10, wobei das Gehäuse (110) in einem Fall einer beidseitigen Stützstruktur ein oberes Wellenloch (112a) und ein unteres Wellenloch (112b) umfasst, die basierend auf dem Strömungspfad (111) einander gegenüberliegen,
wobei das obere Wellenloch (112a) ein mit einer Außenumfangsfläche der Welle (131) gekoppeltes Nadellager (135b), eine unter dem Nadellager (135b) angeordnete Sicherungsscheibe (135e) und ein Dichtungselement (135c), das zwischen einem oberen Wellenloch (112a) und dem Strömungspfad (111) abschirmt, umfasst, die nacheinander vorgesehen sind, und
wobei das untere Wellenloch (112b) eine Buchse (135f), die ein Ende der Welle (131) stützt, und eine Kappe (135g) umfasst, die ein Ende des unteren Wellenlochs (112b) abdeckt.

12. Fahrzeugventil (100) nach einem der Ansprüche 1 bis 11, wobei das Gehäuse (110) ein Entlüftungsloch (115c) umfasst, durch das eine Seitenfläche neben dem Antriebsteil (120) mit einer Außenseite in Verbindung steht.

13. Fahrzeugventil (100) nach einem der Ansprüche 1 bis 12, wobei gegenüberliegende Flächen beider Enden eines Schnittbereichs (CA) des Dichtungselements (136) eine Querschnittsform, die eines von einem Sägezahnmuster oder einem Wellenmuster enthält, aufweisen und miteinander in Eingriff stehen.

## Revendications

1. Soupape de véhicule (100) comprenant:
un boîtier (110) dans lequel une voie d'écoulement (111) est formée et un trou d'arbre (112) est formé dans une direction orthogonale à la voie d'écoulement (111);
une partie d'entraînement (120) disposée à l'intérieur du boîtier (110);
une partie d'ouverture et de fermeture (130) comprenant un arbre (131) relié à la partie d'entraînement (120) et une plaque (132) couplée à l'arbre (131) et ouvrant et fermant sélectivement la voie d'écoulement (111), et régulant le flux de gaz passant par la voie d'écoulement (111); et
la partie d'ouverture et de fermeture (130) comprend un élément d'étanchéité (136) couplé à une rainure d'étanchéité (137) formée sur une surface circonférentielle extérieure de la plaque (132) pour protéger entre la surface circonférentielle intérieure de la voie d'écoulement (111) et la plaque (132) et disposé pour se déplacer horizontalement dans le sens de la largeur de la rainure d'étanchéité (137),
la soupape de véhicule comprend en outre un anneau carré (140) qui entre en contact avec l'élément d'étanchéité (136) lorsqu'il est disposé autour de la plaque (132) pour fermer la partie d'ouverture et de fermeture (130) à l'intérieur de la voie d'écoulement (111), et comprenant au moins une partie plane (147) dans une surface circonférentielle,
dans laquelle, dans la partie d'ouverture et de fermeture (130), la plaque (132) est disposée à une position éloignée d'un arbre de rotation de l'arbre (131),
dans laquelle l'anneau carré (140) comprend:
une partie cylindrique (142) comprenant une partie creuse (143); et
un trou traversant (141) dans lequel est inséré l'arbre (131);
dans laquelle la partie cylindrique (142) comprend:
une première région (144) disposée sur un côté de la partie cylindrique (142);
une deuxième région (145) disposée sur l'autre côté de la partie cylindrique (142); et
une troisième région (146) étant une partie reliant la première région (144) et la deuxième région (145) et ayant une surface circonférentielle intérieure formée d'une surface incurvée ou d'une surface inclinée,
dans laquelle la première région (144) a la plus grande épaisseur parmi la première région (144), la deuxième région (145) et la troisième région (146),
dans laquelle la deuxième région (145) présente une surface circonférentielle intérieure,
dans laquelle la surface circonférentielle intérieure entre en contact avec la plaque (132) ou l'élément d'étanchéité (135) lors de la fermeture de la partie d'ouverture et de fermeture (130), et est constituée d'une surface incurvée ou d'une forme de surface inclinée.

2. Soupape de véhicule de la revendication 1, dans laquelle l'élément d'étanchéité (136) est façonné sous forme d'anneau et a une extrémité et une autre extrémité en face l'une de l'autre, qui sont en contact l'une avec l'autre dans une direction oblique.

3. Soupape de véhicule (100) selon la revendication 1 ou 2, dans laquelle la plaque (132) a une section transversale discoïde, et une largeur intérieure de la rainure d'étanchéité (137) est supérieure à une largeur de l'élément d'étanchéité (136) pour permettre un déplacement horizontal de l'élément d'étanchéité (136) dans un sens de la largeur ou une direction radiale dans la rainure d'étanchéité (137).

4. Soupape de véhicule (100) selon l'une quelconque des revendications 1 à 3, dans laquelle, lorsque la plaque (132) protège la voie d'écoulement (111), lorsque la pression est appliquée dans une première direction, l'élément d'étanchéité (136) est en contact étroit dans la première direction à l'intérieur de la rainure d'étanchéité (137), et lorsque la pression est appliquée dans une seconde direction opposée à la première direction, l'élément d'étanchéité (136) est en contact étroit dans la seconde direction à l'intérieur de la rainure d'étanchéité (137).

5. Soupape de véhicule (100) selon l'une quelconque des revendications 1 à 4, dans laquelle un côté de l'élément d'étanchéité (136), qui est en contact avec au moins une surface circonférentielle intérieure de la voie d'écoulement (111), est élastiquement déformable.

6. Soupape de véhicule (100) selon la revendication 1,
dans laquelle la partie cylindrique (142) est constituée d'un matériau en acier inoxydable; et
dans laquelle le trou traversant (141) à travers lequel une région correspondant au trou de l'arbre (112) est formée sur la partie cylindrique (142).

7. Soupape de véhicule (100) selon la revendication 1 ou 6, dans laquelle dans l'anneau carré (140), la partie plane (147) est disposée de manière à correspondre à une position du trou de l'arbre (112).

8. Soupape de véhicule (100) selon la revendication 7, dans laquelle une pluralité de parties planes (147) est formée dans le sens de la largeur de la partie cylindrique (142) et les parties planes (147) sont disposées à intervalles égaux les unes des autres dans le sens de la circonférence de la partie cylindrique (142).

9. Soupape de véhicule (100) selon l'une quelconque des revendications 1 à 8, dans laquelle dans le cas d'une structure de support unilatérale, le boîtier (110) comprend une douille (135a) couplée à une surface circonférentielle extérieure de l'arbre (131), un roulement à aiguilles (135b), une rondelle de retenue (135e) disposée sous le roulement à aiguilles (135b), et un élément d'étanchéité (135c) faisant office de protection entre un trou d'arbre supérieur (112a) et la voie d'écoulement (111), qui sont disposés de manière séquentielle.

10. Soupape de véhicule (100) la revendication 9, dans laquelle le boîtier (110) comprend un trou d'aération (115c) par lequel le trou d'arbre (112) communique avec l'extérieur et qui est disposé entre la douille (135a) et le roulement à aiguilles (135b), et
dans laquelle un intervalle entre la douille (135a) et le roulement à aiguilles (135b) est plus grand qu'un intervalle entre le roulement à aiguilles (135b) et l'anneau carré (140).

11. Soupape de véhicule (100) selon l'une quelconque des revendications 1 à 10, dans laquelle dans le cas d'une structure de support des deux côtés, le boîtier (110) comprend un trou d'arbre supérieur (112a) et un trou d'arbre inférieur (112b) qui se font face en fonction de la trajectoire d'écoulement (111),
dans laquelle le trou d'arbre supérieur (112a) comprend un roulement à aiguilles (135b) couplé à une surface circonférentielle extérieure de l'arbre (131), une rondelle de retenue (135e) disposée sous le roulement à aiguilles (135b), et un élément d'étanchéité (135c) faisant office de protection entre un trou d'arbre supérieur (112a) et la voie d'écoulement (111), qui sont disposés de manière séquentielle, et
dans laquelle le trou d'arbre inférieur (112b) comprend une douille (135f) supportant une extrémité de l'arbre (131) et un capuchon (135g) couvrant une extrémité du trou d'arbre inférieur (112b).

12. Soupape de véhicule (100) selon l'une quelconque des revendications 1 à 11, dans laquelle le boîtier (110) comprend un trou d'aération (115c) par lequel une surface latérale adjacente à la partie d'entraînement (120) communique avec l'extérieur.

13. Soupape de véhicule (100) selon l'une quelconque des revendications 1 à 12, dans laquelle les surfaces opposées des deux extrémités d'une zone de coupe (CA) de l'élément d'étanchéité (136) ont une forme de section transversale choisie parmi un motif en dents de scie et un motif ondulé, et sont insérées l'une dans l'autre.
